# EUROPEAN PATENT SPECIFICATION

(11) **EP 1 953 885 B1**
(45) Date of publication and mention of the grant of the patent: **04.05.2011**
(21) Application number: 07425060.6
(22) Date of filing: 05.02.2007
(51) Int. Cl.: H02G 3/06, F16L 25/00

(54) **Sealing accessory for cable-conduit systems**
Dichtungszubehör für Kabelführungssysteme
Accessoire d'étanchéité pour systèmes de conduits de câbles

(43) Date of publication of application: 06.08.2008
(73) Proprietor: Bticino S.p.A., 20154 Milano (IT)
(72) Inventor: Fornasiero, Enrico, 15070 Lerma (Alessandria) (IT); Garassino, Luca, 15067 Novi Ligure (Alessandria) (IT)
(74) Representative: Deambrogi, Edgardo

(56) References cited:
- EP-A- 1 783 413
- WO-A-99/54652
- US-A- 5 267 877
- US-B1- 6 237 969

## Description

The present invention relates to accessories for cable-conduit systems, and in particular to a seal for corrugated cable-conduit systems. The invention relates more particularly to a cable-conduit sealing accessory for corrugated cable conduits made of plastics, metal or metal and plastics, which may be used when coupling a cable-conduit member to a corresponding clamping fitting.

In a cable-conduit system, the sheaths or tubes (whether of plastics or metal) adapted to contain and guide a bundle of electrical cables are connected to a drilled panel of an electrical installation apparatus, for instance an electrical board, or to the drilled wall of a member of a cable-management system, for instance a cable-management duct or a connector block, by means of respective fitting accessories which may be made from metal or plastics material.

A typical fitting accessory for cable conduits of the prior art comprises a cylindrical or prismatic body with an axial cavity, adapted stably to house a cable-conduit member such as a sheath or a tube inserted therein, and externally threaded in order to a receive a nut which clamps the fitting.

The cable-conduit member is typically keyed on a retaining member within the main body of the fitting, of tubular shape, adapted to resist traction and slippage of the cable conduit.

Hermetic sealing between the cable conduit and the fitting (degree of IP protection) is ensured by a specific sealing ring which may be resiliently deformed and is adapted to undergo radial compression when the nut is tightened in order to engage the outer surface of the cable conduit and make the connection between the cable-conduit and the fitting impermeable to liquids.

A fitting of this type with mechanical clamping has a high resistance to traction and vibrations and is well sealed against external contaminant agents as a result of the deformable sealing ring.

There are plastics, metal-plastics and metal cable conduits which have a corrugated outer surface in order to improve their flexibility and mechanical strength, and a smooth inner surface to enable sliding of the cables.

In the case of cable conduits which do not have a smooth outer surface, the drawback is that hermetic sealing of the connection cannot be satisfactorily guaranteed as the sealing ring may not adhere fully to the lateral surface of the cable conduit. In particular, contaminants may gain access to the structure of the fitting via the troughs of the corrugation as these troughs are not completely closed by the deformation of the sealing ring.

This is more of a problem with cable conduits with helical corrugation than with those with annular corrugation, as the helical path of the trough which evolves continuously over the entire length of the cable conduit may provide external agents with an access route into the fitting.

US 5 267 877 discloses a collar adapted to engage the external corrugations of the conduit and subject to circumferential contraction when the fitting is tightened, so as to establish a secure connection preventing relative movement between the parts, as well as a good electrical connection.

The object of the present invention is to provide a satisfactory solution to the above-described problem, i.e. to provide a sealing solution guaranteeing a high degree of IP protection equivalent to that which may be obtained with smooth cable-conduit members, for corrugated cable conduits as well.

A further object of the present invention is to provide an accessory for a fitting which may be rapidly and readily installed.

According to the present invention, this object is achieved by a cable-conduit system and a sealing adapter accessory having the characteristic features set out in claim 1 and 4, respectively.

Particular embodiments are set out in the dependent claims.

In summary, the present invention is based on the principle of providing a seal additional to those provided in a fitting for cable-conduit systems of the prior art, in the form of an adapter accessory for use with corrugated cable-conduit members with helical corrugation. The adapter is characterized in that it has a corrugated inner surface with a pitch similar to that of the cable-conduit member and is adapted to be pre-assembled on the cable-conduit member before connection of a fitting.

It is thus possible advantageously to obtain a very high degree of IP protection even for corrugated cable-conduit members.

Further characteristic features and advantages of the invention are set out in further detail in the following description, given by way of non-limiting example, with reference to the accompanying drawings, in which:

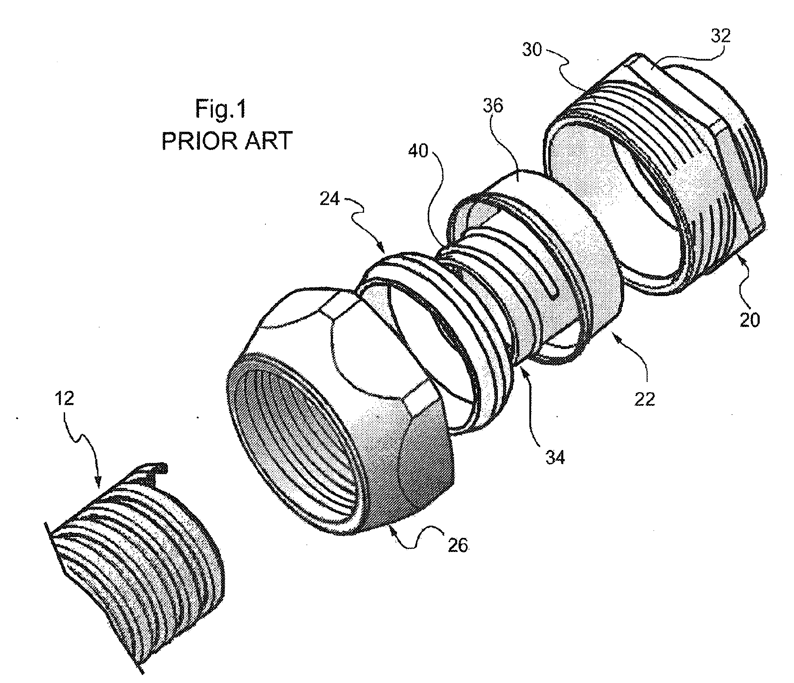

Fig. 1 is an exploded perspective view of a cable-conduit member and a fitting accessory in a coupled arrangement according to the prior art;

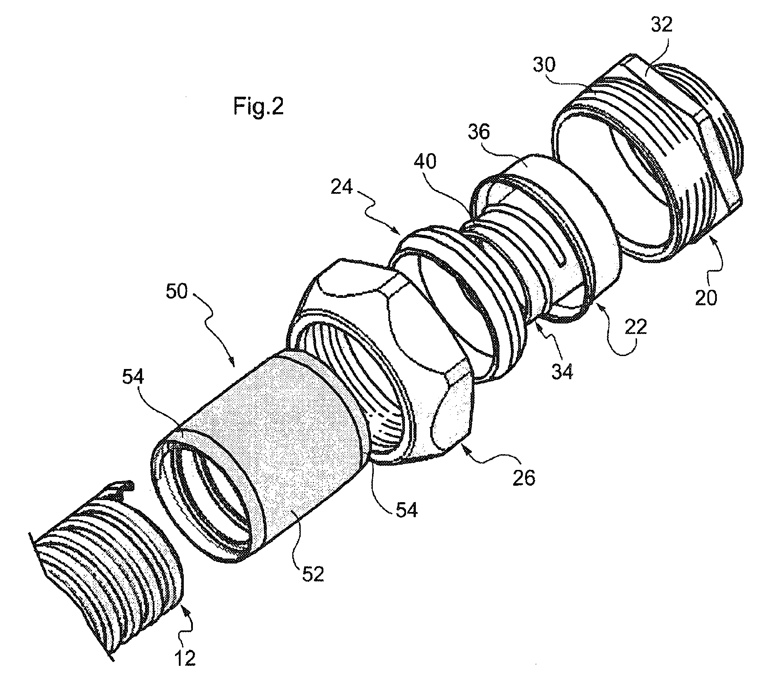

Fig. 2 is an exploded perspective view of a cable-conduit member and a fitting accessory in a coupled arrangement using a sealing accessory of the invention;

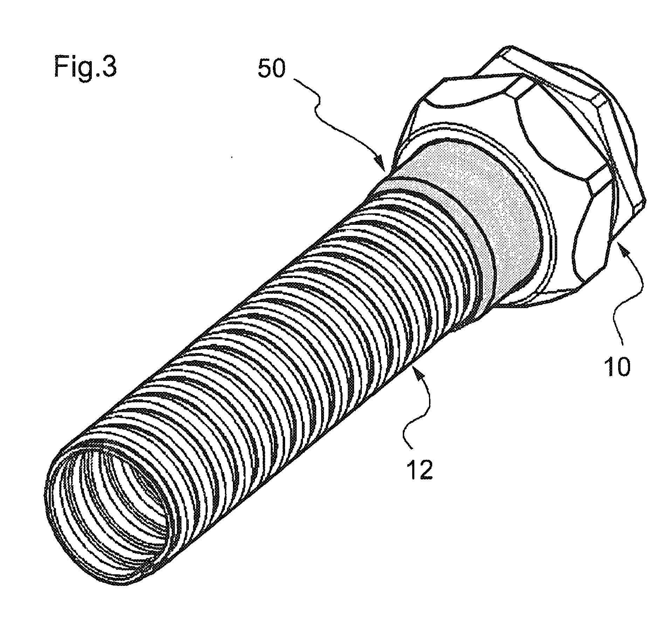

Fig. 3 is a perspective view of a cable-conduit member coupled to a fitting accessory via the sealing accessory of the invention; and

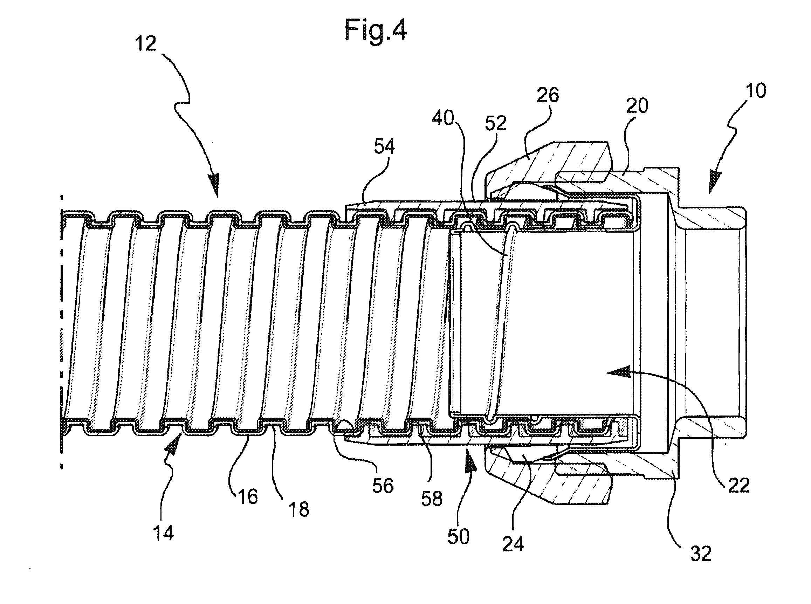

Fig. 4 is an axial section view of the arrangement of Fig. 3.

In the drawings, an accessory for fitting a cable-conduit member 12 to a wall, which bounds a cable housing and distribution space, is generally shown overall with 10. Only those components of the accessory arranged to couple it to the cable-conduit member are shown, while those members adapted to couple it to the wall are not shown.

The cable-conduit member may be entirely of plastics material, entirely of metal or of both metal and plastics material and has an outer surface 14 helically corrugated, i.e. having a ridge 16 (and a corresponding trough 18) which evolve continuously in a helical manner over the entire length of the cable conduit.

The fitting 10 comprises a cylindrical and axially hollow main body 20, a cable-conduit retaining member 22, a sealing ring 24 of resiliently deformable material and a clamping nut 26.

The body 20 includes a cylindrical portion 30 provided with external threading for screwing of the clamping nut 26, which extends from a hexagonal flange 32 on the side opposite the wall coupling section.

The retaining member 22 has a tubular structure 34 (male connection) adapted to be engaged in an end portion of the cable-coupling member and to house the cables internally and is terminated at one end by a curved flange 36 for axial abutment of the cable-coupling member.

In the embodiment shown, the retaining member comprises a helical meshing formation 40 adapted to engage the inner surface of the cable-coupling member so as to resist traction and slippage of the cable-coupling member; a person skilled in the art would nevertheless be aware that other solutions are possible, for instance involving one or more toothed meshing formations, without departing from the scope of protection of the present invention.

The sealing ring 24 (or a more general retaining and sealing member) has a transverse dimension such that it can surround the cable-coupling member 12 inserted therein.

A sealing accessory of the invention is shown with 50. It comprises a sleeve member with a smooth outer surface which has an intermediate portion 52 with a cylindrical outer surface and end portions 54 with respective frustoconical outer lead-in surfaces. The sleeve member has a helically corrugated inner surface, i.e. having a trough 56 (and a corresponding ridge 58) which evolves continuously in a helical manner, preferably over the entire length of the accessory, with a corrugation pitch congruent with the corrugation pitch of the outer surface 14 of the cable-conduit member 12.

The accessory is made from thermoplastic polymer material, preferably classified in group V0 according to standard UL-94 or of halogen-free type, obtainable by injection moulding.

The sealing accessory 50 is adapted to be keyed by screwing, in a detachable manner, onto the cable-conduit member 12, and the mutual engagement of the complementary corrugations (ridge 16 in trough 56 and, vice versa, ridge 58 in trough 18) ensures maximum tightness against external agents between the profile of the cable-conduit member and the sealing accessory.

The frustoconical outer surfaces of the end portions 54 facilitate the phase of assembly of the sealing accessory on the cable-conduit member and the phase of assembly of the fitting.

The smooth outer surface of the sealing accessory is adapted to cooperate with the resiliently deformable annular sealing ring 24 of the fitting accessory, when it undergoes radial compression on tightening of the fitting by complete screwing of the nut 26 so as to ensure sealing against external agents between the profile of the cable-conduit member provided with the sealing accessory and the fitting.

Advantageously, it is thus possible to obtain a very high degree of IP protection, for instance IP68.

Naturally, the principle of the invention remaining the same, the forms of embodiment and details of construction may be varied widely with respect to those described and illustrated purely by way of non-limiting example, without thereby departing from the scope of the present invention as defined in the accompanying claims.

## Claims

1. A cable-conduit system, including:
- a cable-conduit member (12) for containing and guiding a bundle of electrical cables, having an outer surface (14) with a helical corrugation, and
- a clamping accessory (10) for fitting the cable-conduit member (12) to a wall, comprising resiliently deformable annular sealing means (24) arranged to surround the cable-conduit member (12) and adapted to undergo radial compression when the fitting accessory (10) is tightened,
**characterized in that** it comprises a sealing adapter accessory (50) including a sleeve member having a helically corrugated inner surface (56, 58), which is adapted to be keyed by screwing, in a removable manner, on a helically corrugated cable conduit member (12) with a congruent corrugation pitch,
the sleeve member having a smooth outer surface adapted to cooperate with said resiliently deformable annular sealing means (24), so to ensure sealing against external agents between the profile of the cable-conduit member (12) provided with the sealing accessory (50) and the clamping fitting accessory (10).

2. A cable-conduit system according to claim 1, **characterized in that** the sleeve member has an intermediate portion (52) with a cylindrical outer surface and end portions (54) with respective frustoconical outer lead-in surfaces.

3. A cable-conduit system according to claim 1 or 2, **characterized in that** the sleeve member is made from thermoplastic polymer material.

4. A sealing adapter accessory (50) for use in the cable-conduit system of any of claims 1 to 3.

## Patentansprüche

1. Kabelrohrsystem, umfassend:
- ein Kabelrohrelement (12) zum Aufnehmen und Führen eines Bündels aus elektrischen Kabeln mit einer Außenfläche (14) mit einer schraubenlinienförmigen Wellung, und
- einer Klemmvorrichtung (10) zum Befestigen des Kabelrohrelements (12) an einer Wand, umfassend elastisch verformbare, ringförmige Abdichtmittel (24), die um das Kabelrohrelement (12) herum angeordnet und so angepasst sind, dass sie radial zusammengedrückt werden, wenn die Befestigungsvorrichtung (10) angezogen wird, **gekennzeichnet dadurch, dass** es eine abdichtende Adaptervorrichtung (50) umfasst, enthaltend ein Hülsenelement mit einer schraubenlinienförmig gewellten Innenfläche (56, 58), die so angepasst ist, dass sie auf einem schraubenlinienförmig gewellten Kabelrohrelement (12) mit einem kongruenten Wellenabstand mittels Verschrauben lösbar verriegelt werden kann,
wobei das Hülsenelement eine glatte Außenfläche aufweist, die dazu angepasst ist, mit genannten elastisch verformbaren, ringförmigen Abdichtmitteln (24) zu kooperieren, um damit eine Abdichtung gegen äußere Wirkstoffe zwischen dem Profil des mit der Abdichtvorrichtung (50) versehenen Kabelrohrelements (12) und der Klemmbefestigungsvorrichtung (10) sicherzustellen.

2. Kabelrohrsystem nach Anspruch 1, **dadurch gekennzeichnet, dass** das Hülsenelement einen Zwischenabschnitt (52) mit einer zylindrischen Außenfläche und Endabschnitte (54) mit entsprechenden kegelstumpfförmigen äußeren Einleitflächen aufweist.

3. Kabelrohrsystem nach Anspruch 1 oder 2, **dadurch gekennzeichnet, dass** das Hülsenelement aus einem thermoplastischen Polymermaterial besteht.

4. Abdichtende Adaptervorrichtung (50) zur Verwendung im Kabelrohrsystem nach einem der Ansprüche 1 bis 3.

## Revendications

1. Système de conduite de câble, comprenant :
- un élément de conduite de câble (12) pour contenir et guider un faisceau de câbles électriques, ayant une surface extérieure (14) avec une ondulation hélicoïdale, et
- un accessoire de serrage (10) pour fixer l'élément de conduite de câble (12) à une paroi, comprenant des moyens d'étanchéité annulaire élastiquement déformables (24) configurés de façon à entourer l'élément de conduite de câble (12) et adaptés de façon à subir une compression radiale lorsque l'accessoire de raccord (10) est serré,
**caractérisé en ce qu'**il comprend un accessoire d'adaptateur d'étanchéité (50) comprenant un élément de manchon ayant une surface intérieure ondulée de façon hélicoïdale (56, 58), qui est adapté de façon à être verrouillé par vissage, d'une façon amovible, sur un élément de conduite de câble ondulé de façon hélicoïdale (12) avec un pas d'ondulation approprié,
l'élément de manchon ayant une surface extérieure lisse adaptée pour coopérer avec lesdits moyens d'étanchéité annulaires élastiquement déformables (24), de façon à assurer une étanchéité vis-à-vis d'agents extérieurs entre le profil de l'élément de conduite de câble (12) muni de l'accessoire d'étanchéité (50) et l'accessoire de raccord de serrage (10).

2. Système de conduite de câble selon la revendication 1, **caractérisé en ce que** l'élément de manchon comporte une partie intermédiaire (52) avec une surface extérieure cylindrique et des parties d'extrémité (54) avec des surfaces d'emboîtement extérieures tronconiques respectives.

3. Système de conduite de câble selon la revendication 1 ou 2, **caractérisé en ce que** l'élément de manchon est réalisé en un matériau polymère thermoplastique.

4. Accessoire d'adaptateur d'étanchéité (50) destiné à être utilisé dans un système de conduite de câble selon l'une quelconque des revendications 1 à 3.
